# EUROPÄISCHE PATENTANMELDUNG

(11) **EP 0 638 577 A1**
(43) Veröffentlichungstag der Anmeldung: **15.02.1995**
(21) Anmeldenummer: 94112022.2
(22) Anmeldetag: 02.08.1994
(51) Int. Cl.: C07F 9/40, C07F 9/6533, C07F 9/572

(54) **Verfahren zur Herstellung von N-substituierten Aminoalkylenphosphonsäureestern**

(30) Priorität: 11.08.1993 DE 4326887
(71) Anmelder: HOECHST AKTIENGESELLSCHAFT, D-65929 Frankfurt am Main (DE)
(72) Erfinder: Krull, Matthias, Dr., D-65812 Bad Soden (DE); Naumann, Christoph, Dr., D-65527 Niedernhausen (DE)

(57) **Zusammenfassung**

Die vorliegende Erfindung betrifft ein kontinuierliches oder semi-kontinuierliches Verfahren zur Herstellung von N-substituierten Aminoalkylenphosphonsäureestern durch Umsetzung eines Amins, eines Phosphorigsäurediesters und eines Aldehyds oder Ketons, das dadurch gekennzeichnet ist, daß man eine flüssige Zusammensetzung A enthaltend als reaktive Komponenten ein primäres und/oder sekundäres Amin der Formel I 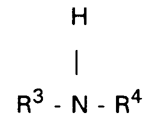
und
einen Phosphorigsäurediester der Formel II 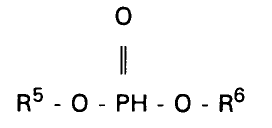
in Form eines Flüssigkeitsstroms A'
und
eine flüssige Zusammensetzung B enthaltend als reaktive Komponente ein Aldehyd und/oder Keton der Formel III 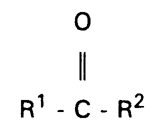
worin
R¹, R², R³, R⁴, R⁵ und R⁶ die genannten Bedeutung haben,
in Form eines Flüssigkeitsstroms B' in eine Vorrichtung zum Mischen dieser beiden Flüssigkeitsströme einbringt und anschließend diese Mischung in einer Reaktionszone bei einer Temperatur im Bereich von 80 bis 200°C umsetzt.

## Beschreibung

Die noch nicht veröffentlichte europäische Patentanmeldung Nr. 93 10 46 52.8 nennt den Einsatz von Copolymeren aus Alkenylaminoalkylenmonophosphonsäurediestern und ethylenisch ungesättigten Verbindungen als Steinverhinderer, z.B. in der Maschinenreinigung` Flaschenreinigung, Dampfproduktion, Kühlwasserbehandlung und Erdölförderung, als Komplexier- und/oder Sequestriermittel, z.B. bei der Wasseraufbereitung, bei der Lederherstellung und in der Papier- und Textilbleiche sowie als Builder und Cobuilder in Waschmitteln. Bei dem dort beschriebenen Verfahren zur Herstellung der Alkenylaminoalkylenmonophosphonsäurediester wird eine Mischung aus Aldehyd oder Keton (X), bester der phosphorigen Säure (Y) und sekundäres Amin (Z) bei Temperaturen im Bereich von 20 bis 200°C umgesetzt, wobei die einzelnen Komponenten (X):(Y):(Z) im Molverhältnis (0,5 - 1,5):(0,5 - 1,5):1 zu Beginn der Umsetzung in der Mischung vorliegen. Bei einer möglichen Ausführungsform wird Paraformaldehyd bei 60°C langsam zu einer gut gerührten Mischung aus Diester und sekundärem Amin gegeben, wobei die langsame Zugabe und das erforderliche Nachrühren der Reaktionsmischung als Nachteile dieses Verfahrens zu nennen sind (s. Bsp. 2, S. 11).

Bei dem in E.K. Fields, J. Am. Chem. Soc. 74, 1528-1531 (1952) beschriebenen Verfahren zur Herstellung von N-substituierten Aminophosphonsäureestern werden Aldehyd oder Keton zu einem Gemisch aus sekundärem Amin und Phosphorigsäurediethylester rasch zugetropft. Die Umsetzungstemperatur wird unter 85°C gehalten. 15 Minuten nach beendeter Zugabe wird das Gemisch abgekühlt, über Natriumsulfat getrocknet und im Vakuum destilliert. Diese Umsetzung wird als exotherm und heftig beschrieben.

Demzufolge ist zu erwarten, daß bei einer Übertragung dieser Reaktionsführung in größere Maßstäbe eine kontrollierte Reaktionsführung nicht ohne weiteres gewährleistet ist.

DE-A-27 41 504 offenbart ein Verfahren zur Herstellung von N-disubstituierten Aminoalkylenphosphonsäuren, bei dem die zugrundeliegenden Ester wie folgt hergestellt werden:
Zu dem Gemisch aus sekundärem Amin und Phosphorigsäurediethylester wird unter Rühren und Kühlen die wäßrige Formaldehydlösung zugetropft und anschließend die Reaktionsmischung im Wasserbad auf 50 bis 100°C erwärmt. Dabei sinkt der pH-Wert der Lösung in den sauren Bereich, was durch eine partielle Verseifung des entstehenden N-disubstituierten Aminoalkylenphosphonsäureesters zu erklären ist. Das gebildete Methanol läßt sich abdestillieren.
Nachteilig an diesem Verfahren ist das Erfordernis des langsamen Zutropfens sowie intensiven Kühlens während der Umsetzung.

US-A-4,650,613 beschreibt ein Verfahren zur Herstellung von Aminomethylendiphosphonaten, die sich von Glycin oder von N-substituierten Glycinderivaten ableiten. Hierbei wird ein Gemisch aus (N-substituiertem) Glycin, Formaldehyd und Phosphorigsäurediester in ein geeignetes Lösungsmittel, z.B. Wasser, niedere Alkohole, Alkane oder Aromaten, gegeben und bei einer Temperatur im Bereich von 0 bis 150°C gerührt. Das Lösungsmittel wird entfernt und das gewünschte Produkt durch Destillation oder Umkristallisation gereinigt. Dieses Verfahren erfordert Umsetzungszeiten von bis zu 48 Stunden unter erhöhter Temperatur bei Einsatzmengen, die weit unter einem Mol der jeweiligen Edukte liegen.

In dem Verfahren der US-A-4,921,991 wird ein Gemisch aus Phosphorigsäurediester, wäßriger Formaldehydlösung und N-substituiertem Glycinderivat, das einen hydrogenolytisch spaltbaren Substituenten, bevorzugt eine Arylalkylgruppe, trägt, gegebenenfalls unter Zugabe eines inerten Lösungsmittels, bei einer Temperatur zwischen 0 und 100°C, bevorzugt zwischen 20 und 90°C, umgesetzt, wobei mehrstündige Zugabezeiten für die Formaldehydlösung erforderlich sind.

GB-A-2,144,425 und GB-A-2,193,497 betreffen Verfahren zur Herstellung von N-disubstituierten Aminomethylenphosphonsäurediestern, die als Zwischenprodukte bei der Herstellung von Aminomethylenphosphonatgruppen enthaltenden Sulfonimidherbiziden dienen. Im allgemeinen erfolgt die Herstellung durch einfaches Mischen der Edukte N-substituiertes Glycin, Formaldehydlösung und Phosphorigsäurediester bei einer Temperatur zwischen 0 und 100°C, bevorzugt 20 bis 90°C. Entsprechend den Beispielen 5 der beiden Patentanmeldungen wird eine 30 gew.-%ige Formaldehydlösung unter Rühren bei Umgebungstemperatur in eine Mischung aus N-Benzylglycinsäureethylester und Phosphorigsäurediethylester getropft. Während des mehrstündigen Zutropfens erhitzt sich die Mischung auf 41°C. Die Mischung wird noch über 1,5 Stunden auf 90°C erhitzt und anschließend abgekühlt. Das Produkt wird durch Extraktion mit Methylenchlorid isoliert. Als Nachteile dieses Verfahrens sind die langen Zutropfzeiten zur Vermeidung einer starken Erwärmung des Reaktionsansatzes sowie die mehrstündigen Reaktionszeiten bei erhöhter Temperatur anzusehen.

GB-A-2,155,476 nennt ein Verfahren zur Herstellung von N-substituierten Aminomethylenphosphonsäurediestern, die durch einfaches Mischen der Edukte N-substituiertes Glycin, wäßrige Formaldehydlösung und Phosphorigsäurediethylester bei einer Temperatur zwischen 0 und 100°C, bevorzugt zwischen 1 und 20°C erhalten werden. Gemäß Beispiel 1 wird zunächst N-Benzylglycin, Wasser und eine wäßrige Formaldehydlösung gemischt und der Phosphorigsäurediphenylester tropfenweise bei Umgebungstemperatur zugegeben. Nach einer halben Stunde wird die Temperatur auf 30°C erhöht und eine weitere Stunde gerührt. Das Produkt wird abfiltriert, mit Wasser gewaschen, getrocknet und anschließend umkristallisiert. Entsprechend Beispiel 2 werden N-Benzylglycin, Wasser und Phosphorigsäurediethylester gemischt und eine wäßrige Formaldehydlösung bei 20°C zugegeben. Die Mischung wird über 5 Stunden auf 50°C erhitzt und anschließend abgekühlt. Das Produkt wird durch Extraktion mit Methylenchlorid isoliert.
Trotz geringer Einsatzmengen sind mehrstündige Reaktionszeiten erforderlich.

Bereits in dem vorstehend genannten Artikel von E.K. Fields wird darauf hingewiesen, daß die Umsetzung von Amin, Formaldehyd und Phosphorigsäurediester eine stark exotherme Reaktion darstellt. Die vorstehend genannten Verfahren arbeiten mit Substanzmengen, die dem Labormaßstab zuzurechnen sind. Eine Übertragung dieser Verfahren in technische Maßstäbe, insbesondere Produktionsmaßstäbe, ist nicht möglich, da die infolge der stark exothermen Reaktion auftretende Wärmeentwicklung eine kontrollierte Reaktionsführung im technischen Maßstab unmöglich macht. Die für eine kontrollierte Reaktionsführung nötigen langen Zugabe- und Reaktionszeiten führen zu einer wirtschaftlich unbefriedigenden Raum-Zeit-Ausbeute.

Aufgabe der vorliegenden Erfindung ist es, ein Verfahren zur Verfügung zu stellen, das im technischen Maßstab, insbesondere im Produktionsmaßstab eine kontrollierte Reaktionsführung bei wirtschaftlicher Raum-Zeit-Ausbeute erlaubt.

Gegenstand der vorliegenden Erfindung ist ein kontinuierliches oder semikontinuierliches Verfahren zur Herstellung von N-substituierten Aminoalkylenphosphonsäureestern durch Umsetzung eines Amins, eines Phosphorigsäurediesters und eines Aldehyds oder Ketons, das dadurch gekennzeichnet ist, daß man eine flüssige Zusammensetzung A enthaltend als reaktive Komponenten ein primäres und/oder sekundäres Amin der Formel I 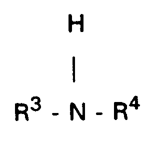
in der
R³ und R⁴ unabhängig voneinander Wasserstoff, C₁-C₂₄-Alkyl-, Halogen-C₁-C₂₄-alkyl-, Hydroxy-C₁-C₂₄-alkyl-, Carboxy-C₁-C₂₄-alkyl-, C₂-C₂₄-Alkenyl-, C₆-C₁₂-Aryl- oder C₁-C₁₀-Alkyl-C₆-C₁₂-arylgruppe bedeuten
und
einen Phosphorigsäurediester der Formel II 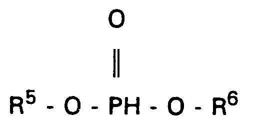
in der
R⁵ und R⁶ unabhängig voneinander C₁-C₁₀-Alkyl-, Halogen-C₁-6₁₀-alkyl-, Hydroxy-C₁-C₁₀-alkyl- oder C₆-C₁₂-Arylgruppe darstellen,
in Form eines Flüssigkeitsstroms A'
und
eine flüssige Zusammensetzung B enthaltend als reaktive Komponente ein Aldehyd und/oder Keton der Formel III 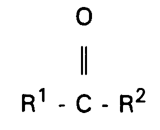
in der
R¹ und R² unabhängig voneinander Wasserstoff, C₁-C₂₀-Alkyl-, Halogen-C₁-C₂₀-alkyl-, Hydroxy-C₁-C₂₀-alkyl- oder C₆-C₁₂-Arylgruppe bedeuten,
in Form eines Flüssigkeitsstroms B' in eine Vorrichtung zum Mischen dieser beiden Flüssigkeitsströme einbringt und anschließend diese Mischung in einer Reaktionszone bei einer Temperatur im Bereich von 80 bis 200°C umsetzt.

Bei dem erfindungsgemäßen Verfahren werden zunächst die flüssigen Zusammensetzungen A und B hergestellt.
Die flüssige Zusammensetzung A besteht aus dem Gemisch der reaktiven Komponenten in Form eines primären und/oder sekundären Amins der Formel I und eines Phosphorigsäurediesters der Formel II. Handelt es sich bei dem Amin und dem Phosphorigsäurediester um Feststoffe, so werden diese üblicherweise in einem geeigneten Lösungsmittel gelöst. Es ist aber auch denkbar, insbesondere bei niedriger Temperatur schmelzenden Verbindungen, die reaktiven Komponenten als Schmelze einzusetzen. Stellt einer der beiden Ausgangsstoffe eine Flüssigkeit dar, so wird entweder der Feststoff in dem flüssigen Ausgangsstoff gelöst oder beide Ausgangsstoffe werden in einem geeigneten Lösungsmittel gelöst. Flüssige Ausgangsstoffe werden üblicherweise ohne Lösungsmittel miteinander gemischt. Geeignete Lösungsmittel sind inerte Flüssigkeiten, die zwar die Ausgangsstoffe lösen, nicht aber an der Umsetzung teilnehmen. Als geeignete Lösungsmittel sind zu nennen: Wasser, niedere Alkohole, bevorzugt C₁-C₆-Alkohole, aromatische Lösungsmittel, wie Toluol und Xylol, polare aprotische Lösemittel, wie N-Methylpyrrolidon, Dimethylformamid, Dimethylsulfoxid sowie Mischungen dieser vorgenannten Lösungsmittel.
Die flüssige Zusammensetzung B besteht aus dem Aldehyd und/oder dem Keton als reaktive Komponente, entweder als Schmelze, Flüssigkeit oder als Lösung. Die reaktiven Komponenten Amin, Phosphorigsäureester und Aldehyd und/oder Keton werden bevorzugt im molaren Verhältnis 0,5-1:0,8-1,2:0,8-1,2 besonders bevorzugt 0,5-1:1:1 für primäre Amine und 0,8-1,2:0,8-1,2:0.8-1,2 besonders bevorzugt 1:1:1 für sekundäre Amine eingesetzt.
Die beiden flüssigen Zusammensetzungen A und B, genauer gesagt die beiden Flüssigkeitsströme A' und B', werden, bevorzugt unter Kühlung, gemischt und gelangen nach dem Mischen in die eigentliche Reaktionszone. Das Mischen der beiden Flüssigkeitsströme erfolgt kontinuierlich in einer hierfür geeigneten Mischvorrichtung. Diese Mischvorrichtung hat für eine ausreichende Durchmischung der beiden Flüssigkeitsströme in möglichst kurzer Zeit zu sorgen, damit mögliche Nebenreaktionen, wie die Bildung von α-Hydroxyalkylenphosphonsäurediestern, vermieden werden. Das Mischen erfolgt üblicherweise bei Temperaturen von 0 bis 50°C, bevorzugt bei Raumtemperatur. Zu den geeigneten Mischvorrichtungen zählen unter anderem Kugelkühler, Schnecke und statischer Mischer.
Das Einbringen der Flüssigkeitsströme A' und B' in die Mischvorrichtung erfolgt bevorzugt mit konstanten Geschwindigkeiten, die auch verschieden sein können, wobei das Einbringen der beiden Lösungen gleichzeitig beendet sein muß. Aufgrund dieser Anforderungen werden im allgemeinen Dosierpumpen eingesetzt. Die Dosiergeschwindigkeit hängt von der Wärmetauschkapazität und der notwendigen Verweilzeit in der nachfolgenden Reaktionszone ab. Die Dosiergeschwindigkeit des Flüssigkeitsstroms A' ist im allgemeinen größer als die für den Flüssigkeitsstrom B', das Verhältnis liegt normalerweise bei 1-4:1.

Unmittelbar nach dem Mischen wird das Gemisch der beiden Flüssigkeitsströme der Reaktionszone zugeführt, in der die Umsetzung bei einer Temperatur im Bereich von 80 bis 200°C erfolgt.
Erfindungsgemäß kann die Umsetzung kontinuierlich oder semi-kontinuierlich durchgeführt werden.
Überraschenderweise hat sich gezeigt, daß sowohl bei der kontinuierlichen als auch bei der semi-kontinuierlichen Durchführung des Verfahrens die exotherme Reaktion auch im technischen Maßstab unter kontrollierten Bedingungen mit hoher Raum-Zeit-Ausbeute abläuft.
Bei der kontinuierlichen Durchführung des erfindungsgemäßen Verfahrens wird eine Reaktionszone gewählt, die über einen Einlauf für das Gemisch der beiden Flüssigkeitsströme sowie einen Ablauf für das Produktgemisch verfügt, gegebenenfalls mit einer Kühlung versehen ist und auf die erforderliche Reaktionstemperatur erwärmt werden kann. Diese beträgt bevorzugt 120 bis 150°C. Im einfachsten Fall besteht die Reaktionszone aus einem beheizbaren Rohr, das gegebenenfalls mit einer Kühlvorrichtung versehen ist. Weitere geeignete Vorrichtungen sind z.B. Ringraum, Rohrbündel, Dünnschichtverdampfer und Kurzwegverdampfer.
Die Dimensionierung der Reaktionszone ist dabei in Abhängigkeit von der pro Zeiteinheit umzusetzenden Eduktmenge so zu wählen, daß eine für die Umsetzung ausreichende Verweilzeit der Reaktanden in der Reaktionszone gewährleistet ist. Im allgemeinen besitzt die Reaktionszone eine Länge von 0,1 bis 20 m, bevorzugt 0,2 bis 5 m.

Zur semi-kontinuierlichen Durchführung eignen sich als Reaktionszonen die üblicherweise im Technikum oder in der Produktion verwendeten Rührgefäße. Der Innenraum des Reaktionsgefäßes besitzt bevorzugt eine Temperatur von 80 bis 150°C, besonders bevorzugt 90 bis 130°C. Die eintretenden Flüssigkeitsströme werden somit umgehend auf die Reaktionstemperatur aufgeheizt und zur Umsetzung gebracht.
Nach Beendigung der Zugabe der Mischung in die Reaktionszone ist auch die Umsetzung zu dem gewünschten Produkt beendet.
Das genaue Ausmaß des Zeitraums richtet sich nach der Menge der flüssigen Zusammensetzungen A und B. Unter Beachtung des vorstehend genannten Temperaturbereiches von 80 bis 150°C wird die Zugabegeschwindigkeit den apparativen Gegebenheiten angepaßt. Ein Nachreagieren der Mischung ist im allgemeinen nicht erforderlich.

Um das Ausmaß der auftretenden Wärmetönung bei der Durchführung des semikontinuierlichen Verfahrens abzuschwächen, ist es ebenfalls möglich, eine gewisse Menge eines Lösungsmittels, wie Wasser, niedere Alkohole, bevorzugt C₁-C₆-Alkohole, aromatische Lösemittel, polare aprotische Lösungsmittel sowie Mischungen der vorgenannten Lösungsmittel, bevorzugt mit Siedepunkten im Bereich der Reaktionstemperatur, vor der Zugabe des Gemisches der beiden Flüssigkeitsströme vorzulegen. Die Menge an vorgelegtem Lösungsmittel beträgt im allgemeinen 5-30 Gew.-% des Gewichts der flüssigen Zusammensetzungen A und B. Das Lösungsmittel kann nach Beendigung der Umsetzung durch einfache Destillation entfernt werden und in einem erneuten Ansatz eingesetzt werden. In einer bevorzugten Ausführungsform des erfindungsgemäßen Verfahrens wird zur Abschwächung der Wärmetönung eine gewisse Menge des herzustellenden Produktes vorgelegt. Diese Maßnahme erspart den Arbeitsschritt der Destillation. Die Menge an Produktvorlage beträgt üblicherweise 10-20 % des Gewichts der flüssigen Zusammmensetzungen A und B.

Der Zulauf der Flüssigkeitsstrome A' und B' in die Reaktionszone entspricht im allgemeinen der Geschwindigkeit, mit der die flüssigen Zusammensetzungen A und B gemischt werden. Bei zu starkem Zulauf wird die Geschwindigkeit, mit der die flüssigen Zusammensetzungen A und B in die Mischvorrichtung eingespeist werden, reduziert oder die Reaktionszone stärker gekühlt.

Bei Zusatz von Lösungsmitteln zu den flüssigen Zusammensetzungen A und/oder B werden sowohl bei dem semi-kontinuierlichen als auch bei dem kontinuierlichen Verfahren wäßrige Lösungen, oder bei Einsatz eines inerten, organischen Lösungsmittels, wäßrig-organische Lösungsmittelgemische erhalten. Das vorhandene Wasser und organische Lösungsmittel wird üblicherweise durch Destillation entfernt. Die dabei erhaltenen wasserfreien N-substituierten Aminoalkylenphosphonsäurediester können je nach Verwendungszweck ohne weitere Reinigung eingesetzt oder z.B. durch Destillation oder Umkristallisation weiter gereinigt werden.

Wie bereits vorstehend erwähnt, werden N-Alkenylaminoalkylenphosphonsäureester zur Copolymerisation mit ethylenisch ungesättigten Verbindungen eingesetzt. Im Hinblick auf diese Verwendung können die bei der erfindungsgemäßen Umsetzung von Alkenylaminen mit Formaldehydlösung und Diethylphosphit erhaltenen wäßrigen Lösungen eingesetzt werden, die bevorzugt folgende Zusammensetzung besitzen:
54 - 77 Gew.-% N-Alkenylaminoalkylenphosphonsäureester
0 - 5 Gew.-% Hydroxyalkylenphosphonsäureester
10 - 28 Gew.-% Wasser und
3 - 13 Gew.-% Alkohol.

Durch Zusatz von Mineralsäuren, z.B. Salzsäure, zu den Aminoalkylenphosphonsäureestern sind die entsprechenden N-substituierten Aminoalkylenphosphonsäuren zugänglich.

Als Aldehyde und Ketone (Carbonylverbindungen) können im erfindungsgemäßen Verfahren beliebige Carbonylverbindungen der allgemeinen Formel III 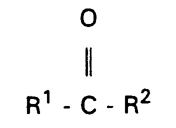
verwendet werden, in der
R¹ und R² unabhängig voneinander Wasserstoff, C₁-C₂₀-Alkyl-, Halogen-C₁-C₂₀-alkyl-, Hydroxy-C₁-C₂₀-alkyl- oder C₆-C₁₂-Arylgruppe bedeuten.

Beispiele für derartige Carbonylverbindungen sind:
- Aldehyde:: Formaldehyd, Paraformaldehyd, Acetaldehyd, Propionaldehyd, Butyraldehyd, Isobutyraldehyd, Benzaldehyd, Cyclohexylcarboxyaldehyd, Furfural, Isovaleraldehyd, Diethylacetaldehyd, Heptaldehyd, 2-Ethylhexanal, Succinaldehyd, Laur inaldehyd und Glyoxal.
- Ketone:: Aceton, Methylethylketon, Methylpropylketon, Methylisopropylketon, Methylisobutylketon, Diethylketon, Dipropylketon, Diisobutylketon, 3-Hydroxymethylencampfer, Acetophenon, Acetylaceton, Brenztraubensäure, 3-Methyl-3-butanol-2-on, Cyclopentanon, Cyclopropylmethylketon, Pinakolon, Mesityloxidepoxid, Acetonylaceton, Ethylacetoacetat, Cyclohexanon, Amylmethylketon, Cycloheptanon, 2-Methylcyclohexanon, 3-Methylcyclohexanon, 4-Methylcyclohexanon, Dihydroisophoron und Diisoamylketon.

Die Ausdrücke "Aldehyd" und "Keton" umfassen Verbindungen, die unter den Reaktionsbedingungen Aldehyde oder Ketone bilden oder als Aldehyde oder Ketone wirken, wie Paraformaldehyd, der bevorzugt wird. Andere Verbindungen wie Acetale und Ketale, z.B. Dibutyl- oder Diformylformal, können ebenfalls verwendet werden.

Das im erfindungsgemäßen Verfahren verwendete Amin kann primär oder sekundär sein und hat die allgemeinen Formel I 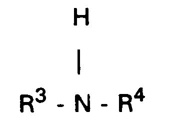
in der R³ und R⁴ unabhängig voneinander Wasserstoff, C₁-C₂₄-Alkyl-, Halogen-C₁-C₂₄-alkyl-, Hydroxy-C₁-C₂₄-alkyl-, Carboxy-C₁-C₂₄-alkyl-, C₂-C₂₄-Alkenyl-, C₆-C₁₂-Aryl- oder C₁-C₁₀-Alkyl-C₆-C₁₂-arylgruppe bedeuten.
Vorzugsweise ist das Amin ein sekundäres Amin. Beispiele für solche Amine, sind Amine mit 1 bis 24 Kohlenstoffatomen im Alkylrest, wie Methylamin, Dimethylamin, Ethylamin, Chlorethylamin, Alkylamin, Diallylamin, N-Propylamin, Isopropylamin, Methylethylamin, N-Butylamin, sek.-Butylamin, Isobutylamin, Diethylamin, Methylpropylamin, Morpholin, Piperidin, Amylamin, Ethylpropylamin, Anilin, Diisopropylamin, Hexylamin, Benzylamin, Heptylamin, Octylamin, Dibutylamin, Nonylamin, Decylamin, Cocosfettamin, Stearylamin, Dicocosfettamin, Distearylamin, Cyclopropylamin, Cyclobutylamin, Cyclopentylamin, Cyclohexylamin, Cycloheptylamin und Cyclooctylamin, Iminodiessigsäure, Iminodiessigsäurealkylester, Alkali- und Erdalkalisalze der Iminodiessigsäure, N-Benzylglycin, N-Benzylglycinalkylester.

Die im erfindungsgemäßen Verfahren eingesetzten Phosphorigsäurediester haben die allgemeine Formel II 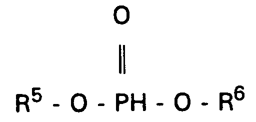
in der R⁵ und R⁶ unabhängig voneinander eine C₁-C₁₀-Alkyl-, Halogen-C₁-C₁₀-alkyl-, Hydroxy-C₁-C₁₀-alkyl- oder C₆-C₁₂-Arylgruppe darstellen.

Repräsentative Beispiele für bevorzugt im erfindungsgemäßen Verfahren verwendete Phosphorigsäurediester sind der Dimethyl-, Diethyl-, Diisopropyl-, Dibutyl-, Dihexyl-, Dioctyl-, Bis-(2-hydroxyethyl)-, Dihydroxypropyl-, Dichlorethyl-, Dibromethyl-, Dimethoxyethyl-, Diallyl- oder Dibenzylester der phosphorigen Säure oder auch der Ethylmethyl-, Ethylchlormethyl-, Methylbenzyl- oder der Diphenylester der phosphorigen Säure.

In den Formeln I, II und III sind bevorzugte Alkylgruppen die Methyl-, Ethyl-, Propyl- und Butylgruppe. Der Ausdruck "Alkylgruppe" umfaßt auch Alkoxyalkylgruppen, wie die Methoxyethyl- und Ethoxyethylgruppe. Die Halogenalkylgruppe enthält bevorzugt Chlor oder Brom und ist z.B. die Chlorethyl- oder Brommethylgruppe. Beispiele für Hydroxyalkylgruppen sind die Hydroxyethyl- und Hydroxypropylgruppe. Der Ausdruck "Hydroxyalkyl" umfaßt auch Hydroxyalkoxyalkylgruppen, wie die Hydroxyethoxyethylgruppe. Die Arylgruppe ist bevorzugt die Phenylgruppe, Naphthylgruppe oder deren substituierte Derivate.

Die Erfindung wird durch die folgenden Beispiele erläutert:

### Beispiel 1

In einem 4 l Einhalskolben werden 582 g (6 Mol) Diallylamin und 828 g (6 Mol) Diethylphosphit vermischt (A).
In einem 1 l Einhalskolben werden 492 g (6 Mol) 37 gew.-%ige Formalin-Lösung vorgelegt (B).
Mit Hilfe von Pumpen werden sodann die Flüssigkeitsströme A' und B' im Vol.-Verhältnis 3:1 über einen Kugelkühler (Mischvorrichtung) zusammengemischt und über die 40 cm lange beheizte Zone eines Dünnschichtverdampfers, welcher auf 140°C geheizt wird, geleitet. Die Gesamtdosiergeschwindigkeit beträgt hierbei 40 ml/min (entsprechend 26,7 ml/min A' und 13,3 ml/min B'). Die benötigte Zeitdauer beträgt 47 Minuten. Das Produktgemisch wird in einer nicht beheizten Vorlage aufgefangen.

### Beispiel 2

Analog Beispiel 1.
Gesamtdosiergeschwindigkeit 10 ml/min (entsprechend 7,6 ml/min A' und 2,4 ml/min B').

### Beispiel 3

In einem 4 l Einhalskolben werden 582 g (6 Mol) Diallylamin und 828 g (6 Mol) Diethylphosphit vermischt (A).
In einem 1 l Einhalskolben werden 492 g (6 Mol) gew.-37 %ige Formalin-Lösung vorgelegt (B).
Mit Hilfe von Pumpen werden die Flüssigkeitsströme A' und B' im Vol.-Verhältnis 3:1 über einen Kugelkühler (Mischvorrichtung) in einen auf 100°C vorgeheizten 4 l Dreihalskolben mit Innenthermometer und aufgesetzten Rückflußkühler, der mit Stickstoff überlagert ist, geleitet. Für eine ausgiebige Durchmischung in dem Reaktionsgefäß sorgt eine Rührvorrichtung.
Die Gesamtdosiergeschwindigkeit beträgt hierbei 10 ml/min (entsprechend 7,6 ml/min A' und 2,4 ml/min B').
Anschließend läßt man die Reaktionslösung unter ständigem Rühren auf Raumtemperatur abkühlen.

Die in den Beispielen 1 bis 3 erhaltenen Produktgemische besitzen gemäß GC-Analyse folgende Zusammensetzung:

ca. 63 Gew.-% Diallylamino-methylenphosphonsäurediethylester ca. 25 Gew.-% Wasser
ca. 4,5 Gew.-% Methanol
ca. 3,6 Gew.-% Hydroxymethylenphosphonsäurediethylester
ca. 1,3 Gew.-% Ethanol.

Diese Reaktionslösung kann ohne weitere Aufarbeitung zur Copolymerisation mit ethylenisch ungesättigten Verbindungen analog der europäischen Patentanmeldung Nr. 93 104 652.8 eingesetzt werden.

### Beispiel 4

Eine Nachbehandlung des Produktgemisches aus Beispiel 1 bei 100°C über einen Zeitraum von 4 Stunden ergibt keine Veränderung der Produktzusammensetzung.

Die nachfolgenden Beispiele werden analog den Beispielen 1 bzw 3 durchgeführt.

### Beispiel 5 (analog Beispiel 1)

439,2 g (6 Mol) Diethylamin und 828 g (6 Mol) Diethylphosphit (A)
492 g (6 Mol) 37 gew.-%ige Formalin-Lösung (B)

### Beispiel 6 (analog Beispiel 1)

1185,6 g (6 Mol) Dibenzylamin und 828 g (6 Mol) Diethylphosphit (A)
492 g (6 Mol) 37 gew.-%ige Formalin-Lösung (B)

### Zusammensetzung gemäß GC-Analyse:

75,2 % Dibenzylamino-methylenphosphonsäurediethylester
10,4 % Wasser
4,4 % Ethanol
2,5 % Methanol.

### Beispiel 7 (analog Beispiel 1)

87,1 g (1 Mol) Morpholin und 138 g (1 Mol) Diethylphosphit (A)
82 g (1 Mol) 37 gew.-%ige Formalin-Lösung (B)

### Zusammensetzung gemäß GC-Analyse:

59,9 % N-Morpholinoamino-methylenphosphonsäurediethylester
27,1 % Wasser
4,6 % Methanol
3,4 % Ethanol
1,7 % Hydroxymethylenphosphonsäurediethylester.

### Beispiel 8 (analog Beispiel 3)

427 g (6 Mol) Pyrrolidin und 828 g (6 Mol) Diethylphosphit (A)
412 g (6 Mol) 37 gew.-%ige Formalin-Lösung (B)

### Zusammensetzung gemäß GC-Analyse:

55,1 % N-Pyrrolidinoamino-methylenphosphonsäurediethylester
28,4 % Wasser
6,1 % Hydroxymethylenphosphonsäurediethylester
5,0 % Methanol
2,9 % Ethanol

### Beispiel 9 (analog Beispiel 3)

28,6 g (0,5 Mol) Allylamin und 138,1 g (1 Mol) Diethylphosphit (A)
82 g (1 Mol) 37 gew.-%ige Formalin-Lösung (B). Die flüssigen, leichtsiedenden Nebenprodukte wurden bei 0,1 Torr/120°C entfernt. Man erhält das Produkt als ein Öl.

### Zusammensetzung gemäß GC-Analyse:

84,3 % N-Allylamino-bis(methylenphosphonsäure)-tetraethylester
3,3 % Hydroxymethylenphosphonsäurediethylester
3,1 % Diethylphosphit.

### Beispiel 10 (analog Beispiel 3)

56,6 g (0,5 Mol) Cycloheptylamin und 138,1 g (1 Mol) Diethylphosphit (A)
82 g (1 Mol) 37 gew.-%ige Formalin-Lösung (B)

### Zusammensetzung gemäß GC-Analyse:

41,1 % N-Cycloheptylamino-bis(methylenphosphonsäure)-tetraethylester
31,7 % Wasser
7,4 % Ethanol
5,6 % Methanol
5,0 % Diethylphosphit,
1,5 % Hydroxymethylenphosphonsäurediethylester

### Beispiel 11 (analog Beispiel 1)

1,52 kg (4 Mol) Di-Cocosfettalkylamin und 552 g (4 Mol) Diethylphosphit (A)
328 g (4 Mol) 37 gew.-%ige Formalin-Lösung (B)

### Beispiel 12 (analog Beispiel 3)

129 g (1 Mol) n-Octylamin und 138,1 g (1 Mol) Diethylphosphit (A)
82 g (1 Mol) 37 gew.-%ige Formalin-Lösung (B)

### Beispiel 13 (analog Beispiel 3)

399,3 g (3 Mol) Iminodiessigsäure werden in 600 ml Wasser mit 318 g (3 Mol) Natriumcarbonat versetzt. Das in Wasser gelöste Iminodiessigsäure-Na-Salz wird mit 414 g (3 Mol) Diethylphosphit vermischt (A).
246 g (3 Mol) 37 gew.-%ige Formalin-Lösung (B).
- ³¹P-NMR:: δ (D₂O) = 29,38 ppm. Die Ausbeute an N-Iminodiessigsäuremethylenphosphonsäure-diethylester-di-Na-Salz beträgt somit 51,4 % des Gesamtphosphors.
- ³¹P-NMR:: δ (D₂O) = 26,96 ppm. Die Ausbeute an N-Iminodiessigsäuremethylenphosphonsäurediethylester beträgt 37,4 % des Gesamtphosphors.

### Vergleichsbeispiel (Wärmetönung)

Zu einer gut gerührten Mischung aus 138,1 g (1 Mol) Diethylphosphit und 97,2 g (1 Mol) Diallylamin werden bei Raumtemperatur 30 g (1 Mol) Paraformaldehyd auf einmal zugegeben. Beim Erwärmen der Mischung springt die Reaktion bei 60°C an, woraufhin die Temperatur binnen weniger Sekunden unkontrollierbar auf 115°C steigt, um anschließend wieder zügig zu sinken.

## Patentansprüche

1. Kontinuierliches oder semi-kontinuierliches Verfahren zur Herstellung von N-substituierten Aminoalkylenphosphonsäureestern durch Umsetzung eines Amins, eines Phosphorigsäurediesters und eines Aldehyds oder Ketons, das dadurch gekennzeichnet ist, daß man eine flüssige Zusammensetzung A enthaltend als reaktive Komponenten ein primäres und/oder sekundäres Amin der Formel I 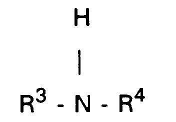 in der
R³ und R⁴ unabhängig voneinander Wasserstoff, C₁-C₂₄-Alkyl-, Halogen-C₁-C₂₄-alkyl-, Hydroxy-C₁-C₂₄-alkyl-, Carboxy-C₁-C₂₄-alkyl-, C₂-C₂₄-Alkenyl-, C₆-C₁₂-Aryl- oder C₁-C₁₀-Alkyl-C₆-C₁₂-arylgruppe bedeuten
und
einen Phosphorigsäurediester der Formel II 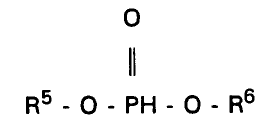 in der
R⁵ und R⁶ unabhängig voneinander eine C₁-C₁₀-Alkyl-, Halogen-C₁-C₁₀-alkyl-, Hydroxy-C₁-C₁₀-alkyl- oder C₆-C₁₂-Arylgruppe darstellen,
in Form eines Flüssigkeitsstroms A'
und
eine flüssige Zusammensetzung B enthaltend als reaktive
Komponente ein Aldehyd und/oder Keton der Formel III 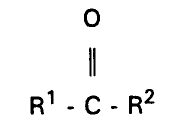 in der
R¹ und R² unabhängig voneinander Wasserstoff, C₁-C₂₀-Alkyl-, Halogen-C₁-C₂₀-alkyl-, Hydroxy-C₁-C₂₀-alkyl- oder C₆-C₁₂-Arylgruppe bedeuten,
in Form eines Flüssigkeitsstroms B' in eine Vorrichtung zum Mischen dieser beiden Flüssigkeitsströme einbringt und anschließend diese Mischung in einer Reaktionszone bei einer Temperatur im Bereich von 80 bis 200°C umsetzt.

2. Verfahren nach Anspruch 1, dadurch gekennzeichnet, daß Amin, Phosphorigsäurediester und Aldehyd und/oder Keton im molaren Verhältnis 0,5-1:0,8-1,2:0,8-1,2 bevorzugt 0,5-1:1:1 im Falle primärer Amine und im molaren Verhältnis 0,8-1,2:0,8-1,2:0,8-1,2 bevorzugt 1:1:1 im Falle sekundärer Amine eingesetzt werden.

3. Verfahren nach Anspruch 1 oder 2, dadurch gekennzeichnet, daß die reaktiven Komponenten in flüssiger Form ohne Zusatz eines Lösungsmittels eingesetzt werden.

4. Verfahren nach Anspruch 1 oder 2, dadurch gekennzeichnet, daß als flüssige Zusammensetzungen Lösungen eingesetzt werden, die als Lösungsmittel inerte Flüssigkeiten enthalten, bevorzugt Wasser, niedere Alkohole, aromatische Lösungsmittel, polare aprotische Lösungsmittel oder Mischungen der vorgenannten Lösungsmittel.

5. Verfahren nach einem der Ansprüche 1 bis 4, dadurch gekennzeichnet, daß als Mischvorrichtung Kugelkühler, Schnecke oder statischer Mischer eingesetzt werden.

6. Verfahren nach einem der Ansprüche 1 bis 5, dadurch gekennzeichnet, daß das Einbringen der Flüssigkeitsströme A' und B' mittels Dosierpumpen erfolgt.

7. Verfahren nach einem der Ansprüche 1 bis 6, dadurch gekennzeichnet, daß das Einbringen der Flüssigkeitsströme A' und B' mit konstanten Geschwindigkeiten erfolgt, die auch verschieden sein können.

8. Verfahren nach einem der Ansprüche 1 bis 7, dadurch gekennzeichnet, daß bei kontinuierlicher Durchführung des Verfahrens die Umsetzung bei einer Temperatur zwischen 80 und 200°C, bevorzugt zwischen 120 und 150°C durchgeführt wird.

9. Verfahren nach einem der Ansprüche 1 bis 8, dadurch gekennzeichnet, daß bei kontinuierlicher Durchführung des Verfahrens ein beheizbares Rohr, gegebenenfalls mit Kühlvorrichtung, eingesetzt wird.

10. Verfahren nach einem der Ansprüche 1 bis 7, dadurch gekennzeichnet, daß bei semi-kontinuierlicher Durchführung des Verfahrens 5-30 Gew.-% eines inerten Lösungsmittels, eines Gemisches mehrerer inerter Lösungsmittel oder des herzustellenden Produkts in der Reaktionszone vorgelegt werden und das Gemisch der Flüssigkeitsströme A' und B' zu dieser Vorlage gegeben wird.

11. Verfahren nach einem der Ansprüche 1 bis 7 und 10, dadurch gekennzeichnet, daß bei semi-kontinuierlicher Durchführung des Verfahrens die Umsetzung des Gemisches der Flüssigkeitsströme A' und B' bei einer Temperatur zwischen 80 und 150°C, bevorzugt zwischen 90 und 130°C stattfindet.

12. Wäßrige Lösung erhalten nach dem Verfahren nach Anspruch 1, dadurch gekennzeichnet, daß diese Lösung
54 - 77 Gew.- % N-Alkenylaminoalkylenphosphonsäureester,
0 - 5 Gew.- % Hydroxyalkylen-phosphonsäureester,
10 - 28 Gew.-% Wasser und
3 - 13 Gew.-% Alkohol enthält.
